# EUROPEAN PATENT SPECIFICATION

(11) **EP 2 893 501 B1**
(45) Date of publication and mention of the grant of the patent: **24.05.2017**
(21) Application number: 13785596.1
(22) Date of filing: 04.09.2013
(51) Int. Cl.: G06Q 20/32

(54) **PRE-PAID VIRTUAL CARD AND METHOD FOR ITS CREATION AND ITS UTILIZATION**
VIRTUELLE PREPAID-KARTE UND VERFAHREN ZU DEREN HERSTELLUNG UND DEREN VERWENDUNG
CARTE PRÉ-PAYÉE VIRTUELLE, SON PROCÉDÉ DE CRÉATION ET SON UTILISATION

(30) Priority: 06.09.2012 IT PD20120257
(43) Date of publication of application: 15.07.2015
(73) Proprietor: 2 Pay S.r.l., 30020 Marcon (IT)
(72) Inventor: OCCARI, Diego, I-35142 Padova (IT); BERNARDI, Daniele, I-30020 Marcon (IT)
(74) Representative: Piovesana, Paolo
(86) International application number: PCT/IB2013/001903
(87) International publication number: WO 2014/037783

(56) References cited:
- US-A1- 2009 006 254
- US-A1- 2011 153 437
- Dustin Karnes: "MasterCard CSI globalVCard Steps onto Mobile Payment Scene, Available to Nearly 92% of Smartphone Users", , 11 October 2011 (2011-10-11), XP002700694, Retrieved from the Internet: URL:http://web.archive.org/web/20120322154 822/http://www.androidguys.com/2011/10/11/ mastercard-csi-globalvcard-steps-mobile-pa yment-scene-92-smartphone-users/ [retrieved on 2013-07-05]

## Description

The present invention relates to a pre-paid virtual card and to a method for its creation and its utilization.

Virtual prepaid cards exist consisting of electronic money instruments, used to make payments without materially transferring money. These provide for the person concerned to stipulate with an authorized Electronic Money Institution (EMI) or with a Bank, a contract according to which, as a result of transfers made in determined manners to a certain account held at the Electronic Money Institution or at a Bank Institution connected thereto, the person concerned has an availability of money, with which to make on-line purchases, obviously within limits set by appropriate regulations.

Traditional virtual prepaid cards are characterised by a sixteen digit PAN code, which has to be entered by the user each time the card is used to make an on-line purchase, and by an IBAN code, to be used to top-up the card.

It is also known to use virtual prepaid cards as payment cards to top-up physical prepaid cards. However there is no way in which payments can be made from one virtual prepaid card to another.

Finally, it is known to use cell phones in payment systems, including to transfer money by debiting a credit card of the settlor.

However there is no way in which the cell phone can be used to create and to use virtual prepaid cards as electronic money instruments.

The reference "MasterCard CSI globalVCard Steps onto Mobile Payment Scene, Available to Nearly 92% of Smartphone Users" describes a particular virtual card called "CSI MasterCard global vCard" and an APP that can be downloaded on mobile phones or tablets and that permits the creation of a virtual card by setting only the amount of money to be charged, as well as specifying the number of transactions for which the card will be valid (one or more).

US 2009/006254 describes a method for creating a virtual prepaid card. In particular, it describes the use of a phone wherein, in order to activate the virtual card, the user must call a special number and use a complicated authentication voice service. Moreover, once the card has been created, the relevant data is then sent via SMS to the user.

US 2011/153437 describes a method for creating a virtual card. It provides:
- the use of a mobile device to generate a request for the data, having limited use, associated with a virtual credit card,
- the receiving, in response to the request, of the requested data,
- the configuration, by means of a suitable electronic interface to be associated with a mobile device, of an area of a plasticized physical card, in which are inserted the received data relating to the virtual card.

US2009/0254440 describes a method for ghosting payment account data in a mobile telephone payment transaction system. An object of the invention is to create a virtual prepaid card usable as an electronic money instrument both to make payments and to make money transfers.

Another object of the invention is to create a virtual prepaid card of very simple use.

Another object of the invention is to create a pre-paid virtual card which substantially reduces entering errors by the user while at the same time facilitating control operations by the operator.

These and other objects which will be apparent from the ensuing description are attained according to the invention by a pre-paid virtual card presenting the characteristics indicated in claim 1.

The invention also comprises a method for creating a pre-paid virtual card as indicated in claim 2.

A preferred embodiment of the invention is further clarified hereinafter by way of non-limiting example.

In greater detail, the pre-paid virtual card according to the invention consists of an electronic money instrument characterised, as are all electronic money instruments, by an identifier which, in the case of a traditional pre-paid virtual card, is assigned by the service operator, whereas according to the present invention, it consists of the telephone subscription number of the cell phone used for creating the pre-paid virtual card and for its use.

For its creation, the user uses a smartphone, to download from the internet an APP application developed precisely for this purpose.

When the APP has been downloaded, it opens a panel in which the user can indicate the language and the currency chosen for the use of the pre-paid virtual card.

Having made these choices, the APP proposes to the user the option of operating in anonymous form (and in this case with limits in the maximum amount usable within a predetermined time period and in the amount usable for a single operation, limits dictated by anti money-laundering regulations valid at any given time in each individual country), or in registered form (and in this case without said limits or with different limits).

In any event, and independently of the manner in which the user intends to operate, the APP creates a pre-paid virtual card and associates therewith the phone number of the smartphone, into which the APP has been downloaded. It then proposes a panel, into which the user has to insert at least an E-mail address, an APP access password and a six-digit PIN security code to set the future payment arrangements, obviously within the limits established by anti money-laundering regulations.

If the user wishes to operate in registered mode, the APP presents in the smartphone a panel in which the user has to insert, in addition to the E-mail address, the password and the PIN code, also his/her personal data, tax code, a telephone number and possible V.A.T. number.

If a user who initially opted to operate in anonymous mode later decides to operate in registered mode, he/she can add to the APP that data which had initially not been supplied.

All the data which the APP has to acquire to create the pre-paid virtual card can be entered by the user at the moment in which the APP is downloaded, or, if at that stage the APP was limited to creating the pre-paid virtual card and to associate with the identifier of this the number of the cell phone into which the APP was downloaded, then at the moment in which the APP is opened for its initial use.

Independently of this, all the data regarding that user and which have been acquired by the APP have to be registered with an Electronic Money Institution (EMI) which operates the network of the pre-paid virtual card according to the invention.

Registration can be done automatically by the APP at the moment in which it was downloaded and had received the user significant data, or the data can be transmitted by the user to the EMI by the APP at the moment of its initial use, or can be transmitted directly by the user to the EMI, to which the APP has connected it at the moment of its initial use.

The manner with which the user stipulates with the EMI the contract which governs the relationship between the two in relation to the pre-paid virtual card is traditional and requires no further description.

The EMI evidently has its own computer system able to govern all relationships with users who are holders of pre-paid virtual cards.

After the pre-paid virtual card has been created, and the user data have been registered by the computer system of the EMI, the use of the APP is extremely simple, in the sense that once the APP has been opened, this proposes a screen with different options corresponding to the operations which the user has to carry out.

### Funds transfer

If the user wishes to transfer funds to another pre-paid virtual card pertaining to the same network, he/she chooses the option "SEND", which proposes a panel in which the user has to enter the identifier of the beneficiary, i.e. the telephone subscription number thereof, the amount to be transferred, possible message or reason, and any request for forwarding the settlor identifier data to the beneficiary.

Once the procedure is activated, the APP forwards the request to transfer funds to the EMI, which first verifies in its computer system the existence of the beneficiary identifier, and the presence in the pre-paid virtual card of sufficient funds to carry out the transaction.

If this check is positive, the EMI transmits to the settlor, through the APP, the main data of the beneficiary, if known, to enable the settlor to check the correctness of the data entered and the instructions given, and asks the settlor to confirm the transaction by entering the PIN code, or to cancel the operation if an error is found.

When the user has confirmed the operation, the computer system of the EMI verifies the correctness of the settlor PIN code, the correspondence of the number of the cell phone which gave the order with the one onto which the APP was downloaded at the moment of creating the pre-paid virtual card, and also the correspondence of the EMI code, which uniquely identifies the cell phone which gave the order, providing in fact a "hard authentication" of three levels of security. If the check is positive, the EMI performs the operation and informs the settlor and the beneficiary of its successful execution, while updating in real time the availability of the respective pre-paid virtual cards.

### Transfering funds to an actual current account

With the pre-paid virtual card according to the invention funds can also be transferred to an actual current account. In this case the user chooses from the initial screen proposed by the APP at the time of its opening, the option "ORDER TO PAY", which is a sub-option of the "SEND" option. In this case the APP proposes a different panel, requiring entry of the data required to perform the operation, and in particular the IBAN number of the beneficiary, the name of beneficiary, the amount and the reason.

In this case the APP forwards the request to the EMI, which carries out a preliminary check on the correctness of the IBAN code of the beneficiary and of sufficient availability in the settlor pre-paid virtual card to carry out the transaction. After performing these checks the EMI sends the data to the bank of the beneficiary to obtain a verification of the correctness of the IBAN code inserted by the settlor and the amount to be paid, then on the basis of these data retransmitted to the settor for his/her verification, requests confirmation of the operation.

This confirmation is given by the settlor by entering the PIN code.

On obtaining this confirmation the EMI updates the availability on the prepaid virtual card of the settlor, taking into account not only the amount transferred but also any commission, and also performs the usual operations connected with the transfer of funds to an actual current account.

### Transferring funds to a beneficiary not the holder of an actual current account

With the pre-paid virtual card according to the invention, money can also be transferred to a beneficiary not belonging to the EMI network, and hence not a holder of a pre-paid virtual card.

In this case the procedure requires the user to insert into the APP the telephone number of the beneficiary.

In this case, on receiving the instructions from the settlor via the APP, the EMI sends an SMS to the cell phone indicated by the settlor, inviting the holder of this cell phone to download the APP and to register it to have the money credited.

### Request for payment

Another option for the holder of the pre-paid virtual card according to the invention is to request a payment to another person pertaining to the EMI network, and hence a holder of another pre-paid virtual.

In this case, from the initial screen which appears on the user's cell phone at the time of opening the APP, the user chooses the option "REQUEST" and enters into the panel proposed by the APP the cell phone number which identifies the user, to which the requested payment is aimed, the amount requested and the possible reason.

The request is checked by the EMI in the form already seen, and is then forwarded to the cell phone of the recipient who is able to give the payment authorization by inserting his/her own PIN code.

### Checking the Account

The same APP also provides on the initial screen next to the two items "SEND" (which also includes within it the function "PAYMENT") and "REQUESTS", the item "ACCOUNT", which allows the holder of the pre-paid virtual card to display his/her account on his/her cell phone, including the latest transactions, to verify the correctness of the operations carried out.

It should be noted that the invention, in addition to providing for communications between each user and the EMI, to take place via the APP, also enables these to also take place directly between the user and the EMI, except evidently for the initial contact to create the pre-paid virtual card, which always takes place between the user and the APP.

Finally, if the transactions take place between pre-paid virtual card holders who have chosen to work with a different currency, the computer system of the EMI instantly converts the amounts at the latest availability currency rate, crediting the beneficiary with the already converted amount and applying the commissions for the currency transaction.

In addition to these specific functions in the use of the pre-paid virtual card, further options can be provided, not strictly related to it, but still useful for carrying out with the cell phone other operations related to the use of actual credit cards held by the same user.

For this purpose, as an alternative to the use of the pre-paid virtual card, the user can also use actual credit cards, even without having them materially available. These cards must be pre-registered with the APP by inserting for each of them the relative data (name of issuer, sixteen digit identifier number, name and surname of holder, expiry date, three digit security code, and any PIN code). Following this registration the credit card or credit cards may appear as options, as an alternative to the pre-paid virtual card, on the initial screen that appears on opening the APP, and allows the user to use them without having them physically available.

Essentially, the present invention differs significantly from all known pre-paid virtual cards, in that instead of having a card identifier attributed by the operator of the electronic money network, it has a different identifier, consisting of the same number as the telephone subscription number used to create the pre-paid virtual card and used when using the card. This brings a very large number of benefits for both the user and the service provider.

As regards the user, the fact that the pre-paid virtual card identifier is the same as the telephone subscription number is advantageous in that:
- a phone number is easier to remember than any other identifier; consequently a pre-paid virtual card that has as its identifier number the number of the cell phone permits an undeniable simplification in payments;
- any payment can be made by simply asking the beneficiary for his/her cell phone number, which he/she will have to hand without having to do any research; moreover if the beneficiary is already the holder of a pre-paid virtual card, he/she will immediately receive the amount transmitted, otherwise a pre-paid virtual card can be requested by a practically immediate operation, without any delay,
- the normal phonebook with which any cell phone is provided, allows any user to immediately have available the telephone numbers of those with which he/she has most frequent contact and to which money can be transferred without the need to search for, remember, or ask clients, friends or suppliers for difficult to remember codes,
- the creation of a closed circuit by means of a pre-paid virtual card system allows money to be transferred with immediate effect, completely avoiding the inter-bank network and the POS network, with significant savings in bank charges, particularly for transactions between parties in different countries,
- the facility to top-up the pre-paid virtual card by debiting a credit card enables virtually any person to receive payments by credit card debiting, in addition to those to whom this facility was reserved in the past.

With regard to the service provider, this can also derive important advantages from the invention, in that:
- the widespread availability of cell phones enables a large number of persons to posses a pre-paid virtual card,
- public accessibility to cell phone lists, in compliance with applicable privacy provisions, makes mass distribution of the payment service extremely simple, including by SMS,
- the uniqueness of user telephone numbers and of holder identification provides an important tool in controlling both the authenticity of transactions and their absolute traceability,
- the fact that the pre-paid virtual card identifier is the same as the telephone subscription number considerably simplifies the control procedures and drastically reduces errors.

## Claims

1. A method for constituting a pre-paid virtual card, **characterised by** downloading from the internet onto a smartphone an application (APP) which at the moment in which it is downloaded creates a pre-paid virtual card and automatically associates with its identifier the telephone subscription number of said smartphone, then registering with an Electronic Money Institution (EMI) which is to operate said pre-paid virtual card, at least said telephone subscription number, the E-mail address of the holder of said subscription, a password for subsequent access, and a PIN security code for future payment instructions.
and said method is further **characterized in that** in order to transfer funds to a beneficiary who does not hold a pre-paid virtual card, the following operations are performed:
- the user inserts into said application (APP) the telephone number of the beneficiary,
- on receiving the instructions from the settlor via said application (APP), the Electronic Money Institution (EMI) sends an SMS to the cell phone indicated by the settlor, inviting the holder of this cell phone to download said application (APP) and to register it to have the money credited.

2. A method as claimed in claim 1, **characterised in that** after said application (APP) has created the pre-paid virtual card and has assigned the telephone subscription number as its identifier, it connects to said Electronic Money Institution (EMI) to register therewith the data relative to the holder of the electronic card, said password and said PIN code.

3. A method as claimed in claim 1, **characterised in that** the data is registered with said Electronic Money Institution (EMI) at the moment of the initial use of said pre-paid virtual card.

4. A method as claimed in one or more of the preceding claims, **characterized in that** on opening said application (APP) an internet connection is established with said Electronic Money Institution (EMI), communications between the user and the Electronic Money Institution taking place via the application (APP).

5. A method as claimed in one or more of the preceding claims, **characterized by** establishing direct communications between the user and the Electronic Money Institution (EMI).

6. A method as claimed in one or more of the preceding claims, **characterized in that** each time said pre-paid virtual card is used, several options are proposed on the smartphone screen, consisting of funds transfer, request for payment, and control of the account of said pre-paid virtual card.

7. A method as claimed in one or more of the preceding claims, **characterized in that** if the user wishes to transfer funds to another pre-paid virtual card pertaining to the same network, the following operations are performed:
- though said application (APP) the settlor enters the identifier of the beneficiary, i.e. the telephone subscription number thereof and the amount to be transferred,
- said application (APP) forwards then the request of transfer funds to the Electronic Money Institution (EMI), which first verifies in its computer system the existence of the beneficiary identifier, and the presence in the pre-paid virtual card of sufficient funds to carry out the transaction,
- if this check is positive, the Electronic Money Institution (EMI) transmits to the settlor, through said application (APP), the main data of the beneficiary, if known, to enable the settlor to check the correctness of the data entered and the instructions given, and asks the settlor to confirm the transaction by entering the PIN code, or to cancel the operation if an error is found,
- when the settlor has confirmed the operation, the computer system of the Electronic Money Institution (EMI) verifies the correctness of the settlor's PIN code, the correspondence of the number of the cell phone which gave the order with the one onto which said application (APP) was downloaded at the moment of creating the pre-paid virtual card, and also the correspondence of the Electronic Money Institution (EMI) code, which uniquely identifies the cell phone which gave the order,
- if the check is positive, the Electronic Money Institution (EMI) performs the operation and informs the settlor and the beneficiary of its successful execution, while updating in real time the availability of the respective pre-paid virtual cards.

8. A method as claimed in one or more of the preceding claims, **characterized in that** if the user wishes to transfer funds to an actual current account, the following operations are performed:
- though said application (APP) the settlor enters the data required to perform the operation, and in particular the IBAN number of the beneficiary, the name of beneficiary, the amount and the reason,
- said application (APP) forwards the request to the Electronic Money Institution (EMI), which carries out a preliminary check on the correctness of the IBAN code of the beneficiary and of sufficient availability in the settlor pre-paid virtual card to carry out the transaction,
- after performing these checks, the Electronic Money Institution (EMI) sends the data to the bank of the beneficiary to obtain a verification of the correctness of the IBAN code inserted by the settlor and the amount to be paid, and then on the basis of these data retransmitted to the settlor for his/her verification, the Electronic Money Institution (EMI) requests confirmation of the operation,
- the settler then gives said confirmation by entering the PIN code,
- on obtaining this confirmation, the Electronic Money Institution (EMI) updates the availability on the prepaid virtual card of the settlor, taking into account the amount transferred and any commission, and also performs the usual operations connected with the transfer of funds to an actual current account.

9. A method as claimed in one or more of the preceding claims, **characterized in that** if the user wishes to request for a payment to another person pertaining to the Electronic Money Institution (EMI) network, and hence a holder of another pre-paid virtual card, the following operations are performed:
- through said application (APP), the user enters the cell phone number which identifies the user to which the requested payment is aimed, the amount requested and the possible reason,
- the request is checked by the Electronic Money Institution (EMI), which first verifies in its computer system the existence of the recipient identifier, and the presence in the pre-paid virtual card of sufficient funds to carry out the transaction,
- then the request is forwarded to the cell phone of the recipient who is able to give the payment authorization by inserting his/her own PIN code.

10. A method as claimed in one or more of the preceding claims, **characterized in that** said application (APP) allows the holder of the pre-paid virtual card to display his/her account on his/her cell phone, including the latest transactions, also in order to verify the correctness of the operations carried out.

11. A method as claimed in one or more of the preceding claims, **characterized in that** if the transactions take place between pre-paid virtual card holders who have chosen to work with a different currency, the computer system of the Electronic Money Institution (EMI) instantly converts the amounts at the latest availability currency rate, crediting the beneficiary with the already converted amount and applying the commissions for the currency transaction.

## Patentansprüche

1. Verfahren zum Einrichten einer virtuellen Prepaid-Karte, **gekennzeichnet durch** Herunterladen einer Anwendung (APP) aus dem Internet auf ein Smartphone, welche in dem Moment, in welchem sie heruntergeladen wird, eine virtuelle Prepaid-Karte erschafft und die Subskriptions-Rufnummer des Smartphones automatisch mit ihrer Kennung verknüpft, dann Registrieren mindestens der Subskriptions-Rufnummer, der E-Mail-Adresse des Inhabers der Subskription, eines Passworts für nachfolgenden Zugriff und eines PIN-Sicherheitscodes für zukünftige Zahlungsanweisungen bei einem E-Geld-Institut (EMI, "Electronic Money Institution"), welches die virtuelle Prepaid-Karte betreiben soll.
und wobei das Verfahren weiter **dadurch** gekennzeichnet ist, dass die folgenden Tätigkeiten durchgeführt werden, um Finanzmittel an einen Begünstigten, der keine virtuelle Prepaid-Karte besitzt, zu transferieren:
- der Benutzer gibt die Rufnummer des Begünstigten in die Anwendung (APP) ein,
- beim Empfangen der Anweisungen von dem Zahler über die Anwendung (APP) sendet das E-Geld-Institut (EMI) eine SMS an das **durch** den Zahler angegebene Mobiltelefon, wodurch der Inhaber dieses Mobiltelefons aufgefordert wird, die Anwendung (APP) herunterzulasen und diese zu registrieren, um das Geld gutgeschrieben zu bekommen.

2. Verfahren nach Anspruch 1, **dadurch gekennzeichnet, dass** sich die Anwendung (APP) mit dem E-Geld-Institut (EMI) verbindet, um damit die Daten bezüglich des Inhabers der elektronischen Karte, das Passwort und den PIN-Code zu registrieren, nachdem sie die virtuelle Prepaid-Karte erschaffen und die Subskriptions-Rufnummer als ihre Kennung zugewiesen hat.

3. Verfahren nach Anspruch 1, **dadurch gekennzeichnet, dass** die Daten in dem Moment der ersten Verwendung der virtuellen Prepaid-Karte bei dem E-Geld-Institut (EMI) registriert werden.

4. Verfahren nach einem oder mehreren der vorstehenden Ansprüche, **dadurch gekennzeichnet, dass** beim Öffnen der Anwendung (APP) eine Internetverbindung mit dem E-Geld-Institut (EMI) aufgebaut wird, wobei Kommunikationen zwischen dem Benutzer und dem E-Geld-Institut über die Anwendung (APP) geschehen.

5. Verfahren nach einem oder mehreren der vorstehenden Ansprüche, **gekennzeichnet durch** Aufbauen direkter Kommunikationen zwischen dem Benutzer und dem E-Geld-Institut (EMI).

6. Verfahren nach einem oder mehreren der vorstehenden Ansprüche, **dadurch gekennzeichnet, dass** jedes mal, wenn die virtuelle Prepaid-Karte verwendet wird, mehrere Optionen auf dem Bildschirm des Smartphones vorgeschlagen werden, bestehend aus einem Finanzmitteltransfer, einer Zahlungsanfrage und einer Steuerung des Kontos der virtuellen Prepaid-Karte.

7. Verfahren nach einem oder mehreren der vorstehenden Ansprüche, **dadurch gekennzeichnet, dass**, wenn der Benutzer Finanzmittel an eine andere virtuelle Prepaid-Karte, die zu demselben Netzwerk gehört, transferieren möchte, die folgenden Tätigkeiten durchgeführt werden:
- über die Anwendung (APP) gibt der Zahler die Kennung des Begünstigten ein, d.h. die Subskriptions-Rufnummer davon und den zu transferierenden Betrag,
- die Anwendung (APP) leitet dann die Anfrage zum Finanzmitteltransfer an das E-Geld-Institut (EMI) weiter, welches zuerst in seinem Computersystem die Existenz von der Kennung des Begünstigten und das Vorhandensein von ausreichenden Finanzmitteln auf der virtuellen Prepaid-Karte, um die Transaktion auszuführen, verifiziert,
- wenn diese Prüfung positiv ist, übermittelt das E-Geld-Institut (EMI) dem Zahler über die Anwendung (APP) die Hauptdaten des Begünstigten, falls bekannt, um dem Zahler zu ermöglichen, die Richtigkeit der eingegebenen Daten und der gegebenen Anweisungen zu prüfen, und bittet den Zahler die Transaktion durch Eingabe des PIN-Codes zu bestätigen oder die Tätigkeit abzubrechen, wenn ein Fehler gefunden wurde,
- wenn der Zahler die Tätigkeit bestätigt hat, verifiziert das Computersystem des E-Geld-Instituts (EMI) die Richtigkeit des PIN-Codes des Zahlers, die Übereinstimmung der Nummer des Mobiltelefons, welches den Auftrag gab, mit derjenigen, auf welcher die Anwendung (APP) im Moment eines Erschaffens der virtuellen Prepaid-Karte heruntergeladen wurde und auch die Übereinstimmung des E-Geld-Institut-(EMI)-Codes, welcher das Mobiltelefon, welches den Auftrag gab, eindeutig identifiziert,
- wenn die Prüfung positive war, führt das E-Geld-Institut (EMI) die Tätigkeit durch und informiert den Zahler und den Begünstigten über dessen erfolgreiche Durchführung, während in Echtzeit die Verfügbarkeit der entsprechenden virtuellen Prepaid-Karten aktualisiert wird.

8. Verfahren nach einem oder mehreren der vorstehenden Ansprüche, **dadurch gekennzeichnet, dass**, wenn der Benutzer Finanzmittel an ein tatsächlich vorliegendes Konto transferieren möchte, die folgenden Tätigkeiten durchgeführt werden:
- über die Anwendung (APP) gibt der Zahler die Daten ein, die erforderlich sind, um die Tätigkeit durchzuführen, und insbesondere die IBAN-Nummer des Begünstigten, den Namen des Begünstigten und den Grund,
- die Anwendung (APP) leitet die Anfrage an das E-Geld-Institut (EMI) weiter, welches eine vorläufige Prüfung der Richtigkeit des IBAN-Codes des Begünstigten und einer ausreichenden Verfügbarkeit auf der virtuellen Prepaid-Karte des Zahlers, um die Transaktion durchzuführen, durchführt,
- nach einem Durchführen dieser Prüfungen sendet das E-Geld-Institut (EMI) die Daten zu der Bank des Begünstigten, um eine Verifizierung der Richtigkeit des IBAN-Codes, der durch den Zahler eingegeben wurde, und des zu zahlenden Betrags zu erhalten, und das E-Geld-Institut (EMI) fragt dann auf Basis dieser an den Zahler für seine/ihre Verifizierung zurückübermittelten Daten eine Bestätigung der Tätigkeit an,
- der Zahler gibt dann die Bestätigung durch Eingabe des PIN-Codes,
- bei Erhalt dieser Bestätigung aktualisiert das E-Geld-Institut (EMI) die Verfügbarkeit auf der virtuellen Prepaid-Karte des Zahlers unter Berücksichtigung des transferierten Betrags und einer Vergütung und führt auch die üblichen Tätigkeiten, die mit dem Transfer von Finanzmitteln auf ein tatsächlich vorliegendes Konto verbunden sind, durch.

9. Verfahren nach einem oder mehreren der vorstehenden Ansprüche, **dadurch gekennzeichnet, dass**, wenn der Benutzer eine Zahlung an eine andere Person, die zu dem E-Geld-Institut-(EMI)-Netz gehört, und somit einen Inhaber einer anderen virtuellen Prepaid-Karte anfragen möchte, die folgenden Tätigkeiten durchgeführt werden:
- über die Anwendung (APP) gibt der Benutzer die Mobiltelefonnummer, welche den Benutzer identifiziert, an welchen die angefragte Zahlung vorgesehen ist, den angefragten Betrag und den möglichen Grund ein,
- die Anfrage wird durch das E-Geld-Institut (EMI) geprüft, welches zuerst in seinem Computersystem die Existenz der Kennung des Empfängers und das Vorhandensein von ausreichenden Finanzmitteln auf der virtuellen Prepaid-Karte, um die Transaktion durchzuführen, verifiziert,
- dann wird die Anfrage an das Mobiltelefon des Empfängers weitergeleitet, welcher in der Lage ist, die Zahlungsgenehmigung durch Eingabe seines/ihres PIN-Codes zu geben.

10. Verfahren nach einem oder mehreren der vorstehenden Ansprüche, **dadurch gekennzeichnet, dass** die Anwendung (APP) dem Inhaber der virtuellen Prepaid-Karte erlaubt, sein/ihr Konto auf seinem/ihrem Mobiltelefon anzuzeigen, einschließlich der letzten Transaktionen, auch um die Richtigkeit der durchgeführten Tätigkeiten zu verifizieren.

11. Verfahren nach einem oder mehreren der vorstehenden Ansprüche, **dadurch gekennzeichnet, dass**, wenn die Transaktionen zwischen Inhabern virtueller Prepaid-Karten, die sich dafür entschieden haben, mit einer anderen Währung zu arbeiten, stattfinden, das Computersystem des E-Geld-Instituts (EMI) unmittelbar die Beträge mit dem neuesten, verfügbaren Währungskurs umrechnet, dem Begünstigten den bereits umgerechneten Betrag gutschreibt und die Vergütungen für die aktuelle Transaktion anwendet.

## Revendications

1. Procédé de constitution d'une carte prépayée virtuelle, **caractérisé par** le téléchargement d'une application (APP) sur un téléphone intelligent depuis internet, qui au moment où elle est téléchargée crée une carte prépayée virtuelle et associe automatiquement à son identifiant le numéro d'abonnement téléphonique dudit téléphone intelligent, puis l'enregistrement auprès d'un établissement de monnaie électronique (EME) qui doit gérer ladite carte prépayée virtuelle, au moins dudit numéro d'abonnement téléphonique, de l'adresse mail du détenteur dudit abonnement, d'un mot de passe pour accès ultérieur et d'un code PIN de sécurité pour de futures instructions de paiement, et ledit procédé est en outre **caractérisé en ce que**, afin de transférer des fonds à un bénéficiaire qui ne possède pas de carte prépayée virtuelle, les opérations suivantes sont effectuées :
- l'utilisateur saisit dans ladite application (APP) le numéro de téléphone du bénéficiaire,
- lors de la réception des instructions du constituant par le biais de ladite application (APP), l'établissement de monnaie électronique (EME) envoie un SMS au téléphone mobile indiqué par le constituant, invitant le détenteur de ce téléphone mobile à télécharger ladite application (APP) et à l'enregistrer pour que l'argent lui soit crédité.

2. Procédé selon la revendication 1, **caractérisé en ce que**, après que ladite application (APP) a créé la carte prépayée virtuelle et a assigné le numéro d'abonnement téléphonique à son identifiant, elle se connecte audit l'établissement de monnaie électronique (EME) pour enregistrer auprès de celui-ci les données relatives au détenteur de la carte électronique, ledit mot de passe et ledit code PIN.

3. Procédé selon la revendication 1, **caractérisé en ce que** les données sont enregistrées auprès dudit établissement de monnaie électronique (EME) au moment de la première utilisation de ladite carte prépayée virtuelle.

4. Procédé selon une ou plusieurs des revendications précédentes, **caractérisé en ce que**, lors de l'ouverture de ladite application (APP), une connexion internet est établie avec ledit établissement de monnaie électronique (EME), la communication entre l'utilisateur et l'établissement de monnaie électronique ayant lieu par le biais de l'application (APP).

5. Procédé selon une ou plusieurs des revendications précédentes, **caractérisé par** l'établissement d'une communication directe entre l'utilisateur et l'établissement de monnaie électronique (EME).

6. Procédé selon une ou plusieurs des revendications précédentes, **caractérisé en ce que**, à chaque fois que ladite carte prépayée virtuelle est utilisée, plusieurs options sont proposées sur l'écran du téléphone intelligent, comprenant le transfert de fonds, la requête de paiement, et le contrôle du compte de ladite carte prépayée virtuelle.

7. Procédé selon une ou plusieurs des revendications précédentes, **caractérisé en ce que**, si l'utilisateur souhaite transférer des fonds à une autre carte prépayée virtuelle appartenant au même réseau, les opérations suivantes sont effectuées :
- par le biais de ladite application (APP), le constituant saisit l'identifiant du bénéficiaire, c'est-à-dire le numéro d'abonnement téléphonique de celui-ci et le montant à transférer,
- ladite application (APP) transmet alors la requête de transfert de fonds à l'établissement de monnaie électronique (EME), qui vérifie d'abord dans son système informatique l'existence de l'identifiant du bénéficiaire, et la présence dans la carte prépayée virtuelle de fonds suffisants pour exécuter la transaction,
- si cette vérification est positive, l'établissement de monnaie électronique (EME) transmet au constituant, par le biais de ladite application (APP), les données principales du bénéficiaire, si celles-ci sont connues, pour permettre au constituant de vérifier l'exactitude des données saisies et des instructions données, et demande au constituant de confirmer la transaction en saisissant le code PIN, ou d'annuler l'opération si une erreur est constatée,
- quand le constituant a confirmé l'opération, le système informatique de l'établissement de monnaie électronique (EME) vérifie l'exactitude du code PIN du constituant, la correspondance entre le numéro du téléphone mobile qui a donné l'ordre et celui sur lequel l'application (APP) a été téléchargée au moment de la création de la carte prépayée virtuelle, et également la correspondance du code de l'établissement de monnaie électronique (EME), qui identifie de manière unique le téléphone mobile qui a donné l'ordre,
- si la vérification est positive, l'établissement de monnaie électronique (EME) exécute l'opération et informe le constituant et le bénéficiaire de la réussite de son exécution, tout en mettant à jour en temps réel les disponibilités des cartes prépayées virtuelles respectives.

8. Procédé selon une ou plusieurs des revendications précédentes, **caractérisé en ce que**, si l'utilisateur souhaite transférer des fonds à un compte courant réel, les opérations suivantes sont effectuées :
- par le biais de ladite application (APP), le constituant saisit les données nécessaires pour effectuer l'opération, et en particulier le code IBAN du bénéficiaire, le nom du bénéficiaire, le montant et le motif,
- ladite application (APP) transmet la requête à l'établissement de monnaie électronique (EME), qui exécute une vérification préalable de l'exactitude du code IBAN du bénéficiaire et des disponibilités suffisantes dans la carte prépayée virtuelle du constituant pour exécuter la transaction,
- après avoir effectué lesdites vérifications, l'établissement de monnaie électronique (EME) envoie les données à la banque du bénéficiaire pour obtenir une vérification de l'exactitude du code IBAN saisi par le constituant et du montant à payer, et ensuite, sur la base de ces données retransmises au constituant pour qu'il les vérifie, l'établissement de monnaie électronique (EME) demande la confirmation de l'opération,
- le constituant donne ensuite ladite confirmation en saisissant le code PIN,
- lorsqu'il obtient cette confirmation, l'établissement de monnaie électronique (EME) met à jour les disponibilités sur la carte prépayée virtuelle du constituant, en tenant compte du montant transféré et de toute commission, et effectue également les opérations habituelles liées au transfert de fonds sur un compte courant réel.

9. Procédé selon une ou plusieurs des revendications précédentes, **caractérisé en ce que**, si l'utilisateur souhaite demander un paiement à une autre personne appartenant au réseau de l'établissement de monnaie électronique (EME), et donc un détenteur d'une autre carte prépayée virtuelle, les opérations suivantes sont effectuées :
- par le biais de ladite application (APP), l'utilisateur saisit le numéro de téléphone mobile qui identifie l'utilisateur auquel la requête de paiement est destinée, le montant demandé et le motif possible,
- la requête est vérifiée par l'établissement de monnaie électronique (EME), qui vérifie d'abord dans son système informatique l'existence de l'identifiant du destinataire, et la présence dans la carte prépayée virtuelle de fonds suffisants pour exécuter la transaction,
- la requête est ensuite transmise au téléphone mobile du destinataire qui est capable de donner l'autorisation de paiement en saisissant son code PIN.

10. Procédé selon une ou plusieurs des revendications précédentes, **caractérisé en ce que** ladite application (APP) permet au détenteur de la carte prépayée virtuelle d'afficher son compte sur son téléphone mobile, y compris les dernières transactions, également pour vérifier l'exactitude des opérations exécutées.

11. Procédé selon une ou plusieurs des revendications précédentes, **caractérisé en ce que**, si les transactions ont lieu entre détenteurs de carte prépayée virtuelle qui ont choisi de fonctionner avec une devise différente, le système informatique de l'établissement de monnaie électronique (EME) convertit instantanément les montants au dernier taux de change disponible, créditant le bénéficiaire du montant déjà converti et appliquant les commissions pour la transaction de devises.
